# EUROPÄISCHE PATENTSCHRIFT

(11) **EP 0 377 099 B1**
(45) Veröffentlichungstag und Bekanntmachung des Hinweises auf die Patenterteilung: **02.03.1994**
(21) Anmeldenummer: 89120943.9
(22) Anmeldetag: 11.11.1989
(51) Int. Cl.: B60K 28/16

(54) **Antriebsschlupfregelsystem**
Regulation system for propulsion slip
Système de régulation du patinage de propulsion

(30) Priorität: 02.12.1988 DE 3840623
(43) Veröffentlichungstag der Anmeldung: 11.07.1990
(73) Patentinhaber: ROBERT BOSCH GMBH, 70442 Stuttgart (DE)
(72) Erfinder: Barth, Günter, Dipl.-Ing, D-7015 Korntal-Münchingen 2 (DE)

(56) Entgegenhaltungen:
- EP-A- 0 163 940
- DE-A- 3 722 088
- DE-A- 3 724 575
- US-A- 4 768 608

## Beschreibung

### Stand der Technik

Die Erfindung betrifft ein Antriebsschlupfregelsystem mit den Merkmalen des Oberbegriffs des Anspruchs 1
Derartige Antriebsschlupfregelsysteme sind allgemein bekannt und üblich. (z.B. DE-A-3 724 575)

### Vorteile der Erfindung

Bei der erfindungsgemäßen Auslegung des Antriebsschlupfregelsystems erhält der Fahrer im Gegensatz zu den bekannten Anordnungen bei Kurvenfahrt eine direkte Rückmeldung über den Abfall der Seitenkraft und kann sich hierdurch besser an den Strassenzustand anpassen.

### Figurenbeschreibung

Anhand der Figurenbeschreibung soll einerseits die Problematik beschrieben werden, die durch die Erfindung verbessert wird und anderseits sollen Ausführungsbeispiele der Erfindung erläutert werden.

Es zeigen:
- Fig. 1 und 2: Diagramme zur Erläuterung der Problematik beim Stand der Technik
- Fig. 3: ein erstes Ausführungsbeispiel der Erfindung
- Fig. 4 - 6: Diagramme zur Erläuterung
- Fig. 7: ein weiteres Ausführungsbeispiel der Erfindung.
- Fig. 8 -10: Diagramme zur Erläuterung.

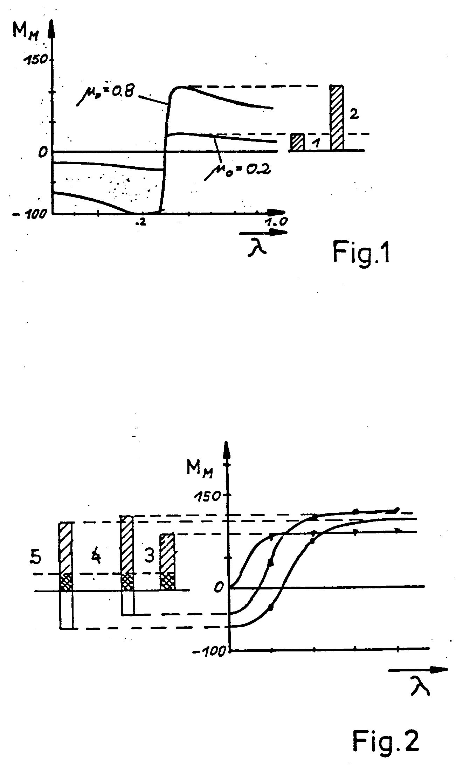

Bei niedrigen Reibbeiwerten ist es für den Fahrer bisher schwierig, daß Verhältnis von Seitenkraft und Vortriebskraft zu wählen, weil er nicht über die angemessenen Verstärkungsfaktoren verfügt. Dies soll anhand der Fig. 1 und 2 gezeigt werden. Die zur Beschleunigung des Antriebsstranges notwendigen Momente werden hier vernachlässigt.

Fig. 1 zeigt das auf die Strasse übertragbare Motormoment im ersten Gang bei einer Aufstandskraft von ∼ 3400N pro Antriebsrad bei zwei angetriebenen Rädern. Die eine Linie zeigt die Kurve bei einen Haftreibungsbeiwert = 0.2, während die andere Linie die Kurve bei einen Haftreibungsbeiwert = 0.8 zeigt.

Fig. 2 zeigt den typischer Verlauf der Kennlinien 'Motormoment als Funktion des Drosselklappenwinkels und zwar bei konstanter Drehzahl von 900, 3000 und 6000 1/min.

In den Figuren bedeuten:
1) zulässiger Stellbereich des Motormomentes bei µ = 0,2
2) zulässiger Stellbereich des Motormomentes bei µ = 0,6
3) Stellbereich des Motormomentes bei Leerlauf (900 1/min)
4) Stellbereich des Motormomentes bei 3000 1/min
5) Stellbereich des Motormomentes bei 6000 1/min

In Fig. 1 ist das auf die Strasse übertragbare Motormoment über dem Reifenschlupf aufgetragen. Man erhält z. B. bei einer Aufstandskraft z = 3400 N, einem Reibbeiwert µo = 0,2, einer Getriebeübersetzung ig = 12,5 und einem Reifenradius re = 0,287 m ein auf die Strasse übertragbares Motormoment von ca. 30 Nm. Mit 1) ist im Fig.1 der Bereich schraffiert angegeben für den eine Beschleunigung des Fahrzeuges erfolgt, ohne daß die Räder in hohen Schlupf laufen.

In Fig. 2 ist das Motormoment als Funktion des Drosselklappenwinkels bei fester Drehzahl dargestellt. Mit 4) ist der Bereich des Motormoments bezeichnet, der bei 3000 1/min dem Fahrer zur Verfügung steht. Die Übersetzung der Fahrpedalstellung in ein Motormoment kann durch verschiedene Kennlinien korrigiert sein, um z. B. dem Fahrer einen linearen Stellbereich des Motormomentes zu ermöglichen. Wenn der Fahrer beschleunigen möchte, muß er mit dem Fahrpedal einen Wert vorgeben, der im doppelt schraffierten Bereich liegt. Man erkennt, daß bei niederem Reibbeiwert µ der Fahrer die schwierige Aufgabe hat, einen eng eingegrenzten Bereich des Motormomentes anzusteuern.
Wenn bei ASR-Betrieb und Auftreten von höheren Schlupfwerten ein höheres Motormoment als schraffiert eingetragen, nicht mehr zulässig ist, und dabei die Zuordnung von Fahrpedalstellung und Motormoment belassen wird, hat der Fahrer ausserhalb des schraffierten Bereiches keine Möglichkeit einen Einfluß auf die Fahrzeugbewegung zu nehmen. So bedeutet eine Rücknahme des Fahrpedals von einem hohen Wert auf einen niedrigeren, aber immer noch einen oberhalb des schraffierten Bereiches liegenden Wert, daß trotz Rücknahme des Fahrpedales keine Verminderung der Fahrzeugbeschleunigung erfolgt. Im verbleibenden schraffierten Bereich bleibt die schlechte Auflösung erhalten und damit die schwierige Dosierung von Seiten- und Vortriebskraft, die somit einem Fahrzeugregler überlassen bleiben muß.

Für den Fahrer bedeutet dies, daß die wichtige Information über den Reibbeiwert der Strasse, die er bisher aus der Differenz von gefahrenem und mit dem Lenkrad vorgegebenem Kurvenradius gewonnen hat, verloren geht (wichtiger Sicherheitsaspekt bei Fahrzeugen mit Frontantrieb).

Erfindungsgemäß wird nun vorgeschlagen, das unter bestimmten Bedingungen die Fahrpedalstellung nicht mehr einem Motormoment, sondern einen Sollschlupf, den der Regler einstellen soll, entspricht. In einer Anpassungsphase muß bei schnellen Änderungen der Reibungsbeiwerte der Strasse (µ-Sprung) zunächst die Stabilität gewährleistet werden, um dann zur Regelung auf einen Sollschlupf übergehen zu können. In Abhängigkeit von der Geschwindigkeit des µ-Sprunges wird der Übergang von einer Schlupfregelung ohne Fahrereinfluß auf die Sollschlupfregelung durch den Fahrer gewählt.

Der Fahrer erhält über den gefahreren Kurvenradius eine direkte Rückmeldung über den Abfall der Seitenkraft und kann seine Fahrzeuggeschwindigkeit besser an den Strassenzustand anpassen. Dabei wird er in die Lage versetzt, das Verhältnis von Vortriebs- und Seitenkraft so einzustellen, wie er es wünscht, da durch die Vorgabe des Sollschlupfes der Bereich, in welchem die Seitenkraft stark abfällt, gut aufgelöst wird.

Benötigt wird dazu ein ASR-Schlupfregler, mit dem der Sollschlupf geregelt werden kann und mit dem der Reibbeiwert (bzw. das auf die Strasse übertragbare Moment) bestimmt werden kann. Es werden zwei unterschiedliche Methoden vorgestellt, wie die Momentenvorgabe des Fahrpedals durch eine Schlupfvorgabe abgelöst werden kann. Verschiedene Mischformen zwischen den beiden sind möglich.

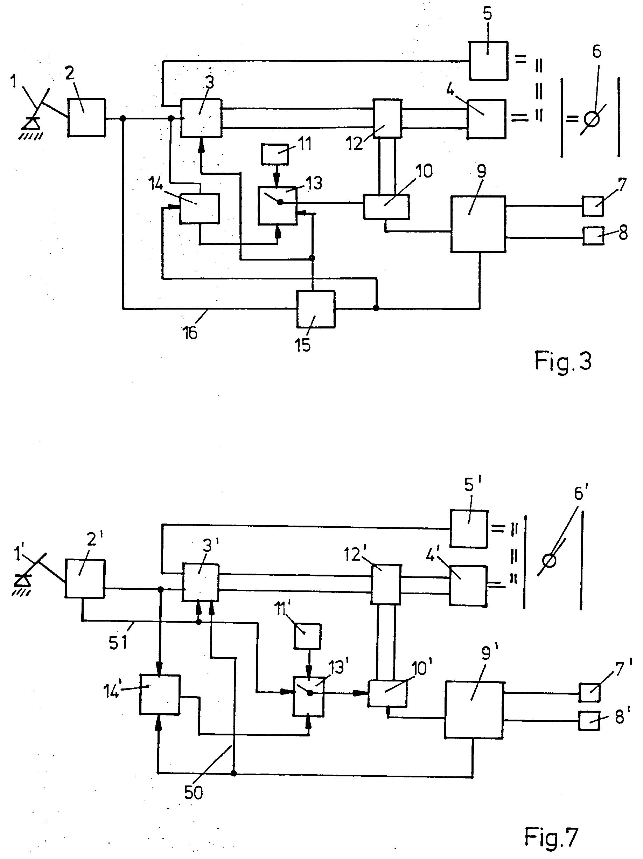

In Fig. 3 ist mit 1 ein Fahrpedal, mit 2 ein Stellungsgeber, der ein der Fahrpedalbetätigung entsprechendes Signal abgibt, mit 3 ein Vergleicher, mit 4 ein Antrieb für eine Drosselklappe 6 und mit 5 ein Stellungsgeber, der die Drosselklappenstellung abtastet, bezeichnet. Bei Niedertreten des Fahrpedals 1 wird das dadurch im Signalgeber 2 erzeugte Signal mit dem Signal des Stellungsgebers 5 verglichen. Entsprechend der im Vergleicher 3 vorgegebenen Kennlinie für die Drosselklappennachstellung wird ein Signal für den Antrieb 4 erzeugt, der die Drosselklappe 6 entsprechend verstellt.

Zusätzlich ist ein Antriebsschlupfregelsystem vorgesehen, das Sensoren 7 und 8 für die Geschwindigkeiten nicht angetriebener und angetriebener Räder, eine Auswertschaltung 9, einen Vergleicher 10, einen Sollschlupfgeber 11 und eine Einkoppeleinrichtung 12 umfaßt. Wird durch den Vergleich des in der Auswertschaltung 9 festgestellten Radschlupfs mit dem festen Sollschlupf aus Block 11 in einem Vergleicher 10 festgestellt, daß der Sollschlupf überschritten ist, so wird ein Reduziersignal für das Motormoment erzeugt, das über die Einkoppeleinrichtung 12 dem Stellsignal des Vergleichers 3 überlagert wird und unabhängig vom Fahrerwunsch die Drosselklappe 6 im Sinne einer Reduzierung des Motormoments verstellt.

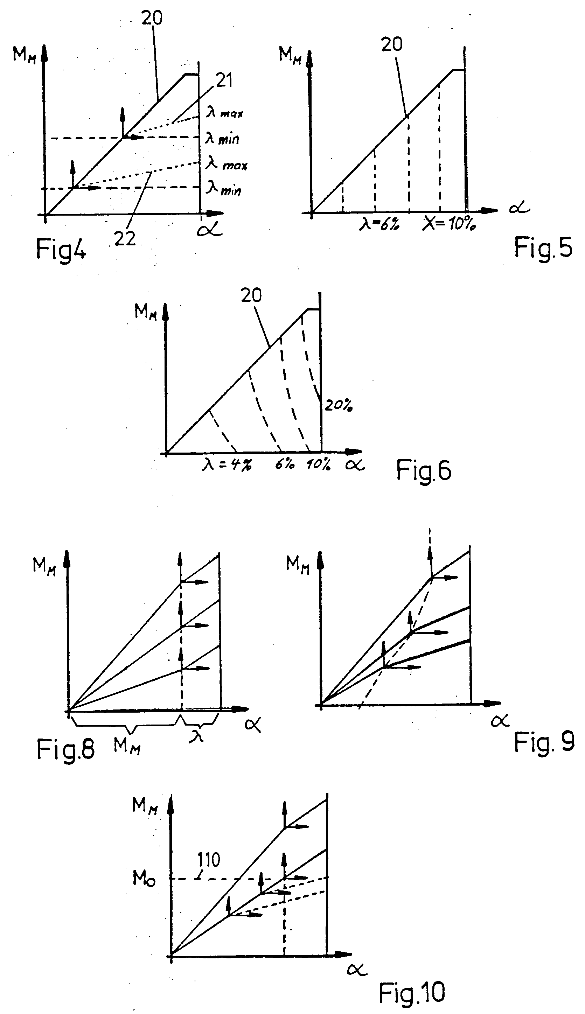

Die Wirkung der Komponenten 1, 2, 3, 4, 5 und 6 ergibt sich aus der Kurve 20 der Fig. 4, in der das Motormoment M_{M} über der Fahrpedalstellung α dargestellt ist, wobei hier als Kennlinie des Vergleichers 3 eine Gerade gewählt ist. Erfindungsgemäß soll nun aber bei Erreichen der Fahrpedalstellung, die bei dem vorhandenen µ dem maximal übertragbare Motormoment entspricht auf eine Abhängigkeit des Radschlupfs von der Fahrpedalstellung α umgeschaltet werden. Die gewählte Abhängigkeit ist für zwei maximal übertragbare Motormomente (= zwei festgestellte µ) eingezeichnet und mit 21 und 22 bezeichnet. Die gepunktete Kurve stellt den maximal zulässigen Schlupfverlauf in Abhängigkeit von α bei dem festgestellten µ dar (λ* max. (µ)). Die gestrichelte Kurve zeigt den minimalen Schlupfverlauf. Dazwischen wäre jeder Schlupfverlauf wählbar.

Diese Umschaltung auf die andere Abhängigkeit ist in Fig. 3 dadurch realisiert, daß mittels eines Umschalters 13 der Vergleichsschlupf von dem konstanten Schlupf des Blocks 11 auf einen variablen Vergleichschlupf umgeschaltet wird, der in einem Block 14 nach Maßgabe der Pedalstellung und der wirksamen Kennlinie gebildet wird (entsprechend Kennlinien 21, 22). Erreicht die Pedalstellung den Punkt, der dem maximal übertragbaren Motormoment bzw. dem festgestellten µ entspricht, so soll die Umschaltung erfolgen. Festgestellt wird dies in einem Vergleicher 15, der die Pedalstellung Ltg. 16 mit dem in der Auswertschaltung 9 festgestellten µ vergleicht. Das dann entstehende Ausgangssignal schaltet einmal den Schalter 13 um, und bewirkt, daß das Ausgangssignal des Vergleichers 3 gespeichert bleibt (Anfangspunkt der Kennlinie 21 und 22). Dem Block 14 wird das festgestellte µ mitgeteilt, um die richtige Kennlinie wirksam zu machen.

Das µ kann in der Auswertschaltung 9 in verschiedener Weise festgestellt werden.

Die Fig. 5 und 6 zeigen der Fig. 2 entsprechende Kurvenläufe.

In Fig. 7 entsprechen die Kompenenten 1' bis 14' im wesentlichen den Komponenten 1 - 14 der Fig. 3: die Einstellung der Drosselklappe entsprechend der Fahrerpedalstellung (Komponenten 1' - 6') und das ASR (Komponenten 7'- 13') funktionieren prinzipiell in gleicher Weise wie in Fig. 3.

Der einzige Unterschied besteht darin, daß entsprechend Fig. 8 nicht eine Kennlinie im Block 3' für die Abhängigkeit der Stellung der Drosselklappe vom Fahrpedal vorgegeben ist, sondern eine Schar von Kennlinien, von denen Fig. 8 drei zeigt. Diese Kennlinien sind von µ abhängig (je steiler je höher das zulässige µ). Die zugehörige Kennlinie wird nach einer ersten Feststellung über Ltg. 50 ausgewählt und ist dann für die Verstellung der Drosselklappe 6' zuständig.

Der Einsatz der Drosselklappenverstellung in Abhängigkeit vom Schlupf erfolgt hier ab Erreichen einer bestimmten Drosselklappenstellung (siehe Fig. 8). Hierzu schaltet der Stellungsgeber 2' über eine Leitung 51 bei Erreichen dieser Pedalstellung den Schalter 13' um und führt damit einen von der Pedalstellung abhägigen Schlupf (aus 14') als Vergleichsschlupf dem Vergleicher 10' zu, sodaß nunmehr die Drosselklappe 6' entsprechend einem variablen Sollschlupf verstellt wird. Hier muß das Ausgangssignal des Vergleichers 3' ab Auftreten des Signals auf Leitung 51 gespeichert werden. Die wirksame Kennlinie des Blocks 14' wird durch das in der Auswertschaltung 9' ermittelte µ bestimmt.

Fig. 9 weicht von Fig. 8 nur dadurch ab, daß die Umschaltpunkte innerhalb der einzelnen Kennlinien nicht durch eine feste Pedalstellung gegeben ist, sondern die Umschaltpunkte entsprechend Fig. 3 und Fig. 4 bei Erreichen einer bestimmten Fahrpedalstellung bei gegebenem µ festgelegt werden.

Auch in Fig. 10 werden unterschiedliche Kennlinien ähnlich wie bei der Fig. 8 und 9 verwendet. Der Unterschied liegt darin, daß oberhalb einer Schwelle 11o für das Motormoment durch das Erreichen einer bestimmten Pedalstellung auf den schlupfabhängigen Betrieb umgeschaltet wird, daß jedoch unterhalb dieser Schwelle 11o das augenblicklich gemessene µ im Vergleich zur Pedalstellung (ähnlich Fig. 1 und 2) die Umschaltung auslöst.

## Patentansprüche

1. Antriebsschlupfregelungssystem für ein Straßenfahrzeug, bei dem bei Durchdrehneigung der angetriebenen Räder mittels eines Reglers (4, 6, 7, 8, 9, 10, 11) das Motormoment variiert wird und gegebenenfalls zusätzlich die Räder gebremst werden (ASR-Regelbetrieb) und bei dem bei nicht laufendem ASR-Regelbetrieb das Motormoment mittels eines ersten Einstellsystems (1 bis 6), das eine vorgegebene abgespeicherte Kennlinie (20) aufweist, entsprechend der Stellung des Fahrpedals eingestellt wird, dadurch gekennzeichnet, daß das erste Einstellsystem (1 bis 6) nur in einem bei 0 beginnenden unteren Einstellbereich wirksam gemacht wird, und daß in einem nach oben anschließenden zweiten Einstellbereich für das Motormoment ein zweites Einstellsystem (2, 7 bis 10, 13, 15, 4, 6) wirksam gemacht wird, das das Motormoment nach Maßgabe einer zweiten Kennlinie (21, 22) einstellt, die jeder Fahrpedalstellung einen Sollschlupf zuordnet.

2. Antriebsschlupfregelsystem nach Anspruch 1, dadurch gekennzeichnet, daß das zweite Einstellsystem (2, 7 bis 10, 13 bis 15, 4, 6) bei einer vom festgestellten Haftungsbeiwert µ abhängigen Fahrpedalstellung (α) wirksam gemacht wird.

3. Antriebsschlupfregelsstem nach Anspruch 1, dadurch gekennzeichnet, daß das erste Einstellsystem (1 bis 6) eine Schar von Kennlinien (in 3) aufweist, von denen eine entsprechend dem festgestellten Haftungsbeiwert µ ausgewählt wird und daß das zweite Einstellsystem (2, 7 bis 10, 13 bis 15, 4, 6) ab dem Erreichen einer vorgegebenen Stellung (α) des Fahrpedals wirksam gemacht wird (Figur 8).

4. Antriebsschlupfregelsystem nach Anspruch 1, dadurch gekennzeichnet, daß das erste Einstellsystem (1 bis 6) eine Schar von Kennlinien (in 3) aufeist, von denen eine entsprechend dem festgestellten Haftungsbeiwert µ ausgewählt wird und daß das zweite Einstellsystem (2, 7 bis 10, 13 bis 15, 4, 6) bei einer vom festgestellten Haftungsbeiwert µ abhängigen Fahrpedalstellung (α) wirksam gemacht wird (Figur 9).

5. Antriebsschlupfregelsystem nach einem der Ansprüche 3 oder 4, dadurch gekennzeichnet, daß unterhalb eines vorgegebenen Haftungsbeiwerts µ das zweite Einstellsystem (2, 7 bis 10, 13 bis 5, 4, 6) bei einer vom festgestellten Haftungsbeiwert µ abhängigen Fahrpedalstellung (α) wirksam gemacht wird und daß ab Erreichen des vorgegebenen Haftungsbeiwerts µ das zweite Einstellsystem (2, 7 bis 10, 13 bis 15, 4, 6) bei Erreichen einer bestimmten Fahrpedalstellung wirksam gemacht wird (Figur 10).

## Claims

1. Drive slip control system for a road vehicle, in which the engine torque is varied and, if necessary, the wheels are in addition braked (drive slip control operation) by means of a control system (4, 6, 7, 8, 9, 10, 11) when the driven wheels tend to spin and in which, when the drive slip control is not operating, the engine torque is set corresponding to the position of the accelerator pedal by means of a first setting system (1 to 6) which has a specified, stored characteristic (20), characterised in that the first setting system (1 to 6) is only made effective in a lower setting range beginning at 0, and in that a second setting system (2, 7 to 10, 13, 15, 4, 6) is made effective in a second setting range for the engine torque following on in the upwards direction, which second setting system sets in accordance with a second characteristic (21, 22) which assigns each accelerator pedal position a required slip.

2. Drive slip control system according to Claim 1, characterised in that the second setting system (2, 7 to 10, 13 to 15, 4, 6) is made effective at an accelerator pedal position (α) dependent on the adhesion coefficient µ which has been determined.

3. Drive slip control system according to Claim 1, characterised in that the first setting system (1 to 6) has a family of characteristics (in 3), of which one is selected corresponding to the adhesion coefficient µ which has been determined and in that the second setting system (2, 7 to 10, 13 to 15, 4, 6) is made effective from the attainment of a specified position (α) of the accelerator pedal (Fig. 8).

4. Drive slip control system according to Claim 1, characterised in that the first setting system (1 to 6) has a family of characteristics (in 3), of which one is selected corresponding to the adhesion coefficient µ which has been determined and in that the second setting system (2, 7 to 10, 13 to 15, 4, 6) is made effective at an accelerator pedal position (α) dependent on the adhesion coefficient µ which has been determined (Fig. 9).

5. Drive slip control system according to one of Claims 3 or 4, characterised in that below a specified adhesion coefficient µ, the second setting system (2, 7 to 10, 13 to 5 [sic], 4, 6) is made effective at an accelerator position (α) dependent on the adhesion coefficient µ which has been determined and in that from attainment of the specified adhesion coefficient µ, the second setting system (2, 7 to 10, 13 to 15, 4, 6) is made effective on reaching a certain accelerator pedal position (Fig. 10).

## Revendications

1. Système de régulation du patinage moteur pour un véhicule routier selon lequel lorsque les roues motrices ont tendance à s'emballer, on modifie le couple moteur à l'aide d'un régulateur (4, 6, 7, 8, 9, 10, 11) et le cas échéant on freine en outre les roues (mode de régulation ASR) et selon lequel, lorsque le mode de régulation ASR n'est pas mis en oeuvre, on règle le couple moteur à l'aide d'un premier système de réglage (1-6) ayant une courbe caractéristique (20), prédéterminée, mise en mémoire, en fonction de la position de la pédale d'accélérateur, système caractérisé en ce que l'on met en oeuvre le premier système de réglage (1-6) que dans une plage de réglage inférieure commençant par 0 et en ce que dans une seconde plage de réglage se poursuivant vers le haut, on met en oeuvre le second système de réglage (2, 7 à 10, 13, 15, 4, 6) pour le couple moteur qui règle le couple moteur selon l'indication d'une seconde courbe caractéristique (21, 22), associant un patinage de consigne à chaque position de la pédale d'accélérateur.

2. Système de régulation anti-patinage moteur selon la revendication 1, caractérisé en ce que le second système de réglage (2, 7 à 10, 13 - 15, 4, 6) est mis en oeuvre en fonction de la position de la pédale d'accélérateur (α) pour un coefficient d'adhérence µ déterminé.

3. Système de régulation anti-patinage moteur selon la revendication 1, caractérisé en ce que le premier système de réglage (1 - 6) présente un faisceau de courbes caractéristiques (selon 3) parmi lesquelles on en choisit une en fonction du coefficient d'adhérence fixe µ et le second système de réglage (2, 7 à 10, 13 - 15, 4, 6) est mis en oeuvre après que l'on ait atteint une position prédéterminée (α) (figure 8).

4. Système de régulation anti-patinage moteur selon la revendication 1, caractérisé en ce que le premier système de réglage (1 - 6) présente un faisceau de courbes caractéristiques (selon 3) parmi lesquelles on en sélectionne une suivant le coefficient d'adhérence µ, fixe et on met en oeuvre le second système de réglage (2, 7 à 10, 13 - 15, 4, 6) à partir d'une position de la pédale d'accélérateur (α) dépendant du coefficient d'adhérence µ déterminé (figure 9).

5. Système de régulation anti-patinage moteur selon la revendication 3 ou 4, caractérisé en ce qu'en dessous d'un coefficient d'adhérence µ, prédéterminé, on fait agir le second système de réglage (2, 7 à 10, 13 - 5, 4, 6) à partir d'une position de la pédale d'accélérateur (α) dépendant d'un coefficient d'adhérence fixe µ et en ce que lorsqu'on atteint le coefficient d'adhérence µ, prédéterminé, on met en oeuvre le second système de réglage (2, 7 à 10, 13 - 15, 4, 6) lorsqu'on atteint une position déterminée de la pédale d'accélérateur (figure 10).
